# EUROPÄISCHE PATENTSCHRIFT

(11) **EP 1 579 948 B1**
(45) Veröffentlichungstag und Bekanntmachung des Hinweises auf die Patenterteilung: **04.10.2006**
(21) Anmeldenummer: 04006832.2
(22) Anmeldetag: 22.03.2004
(51) Int. Cl.: B23Q 1/00, B23Q 7/14, B23H 7/26

(54) **Spanneinrichtung**
Clamping device
Dispositif de serrage

(43) Veröffentlichungstag der Anmeldung: 28.09.2005
(73) Patentinhaber: Schunk GmbH & Co. KG Spann- und Greiftechnik, 74348 Lauffen (DE)
(72) Erfinder: Supanz, Johann, 6844 Altach (AT)
(74) Vertreter: Paul, Dieter-Alfred

(56) Entgegenhaltungen:
- EP-A- 0 185 842
- EP-A- 0 291 482
- US-A- 5 961 261

## Beschreibung

Die vorliegende Erfindung betrifft eine Spanneinrichtung zur Fixierung eines Bauteils an einem Träger mit einem Spannkopf, der mit einer Aufnahme eines zu spannenden Bauteils in Eingriff bringbar ist, und einem Spannmechanismus mit mehreren Klemmelementen, die an dem Spannkopf gehalten und radial zwischen einer äußeren Spannstellung, in der sie in die Aufnahme eines zu spannenden Bauteils greifen können, um dieses an dem Spannkopf zu arretieren, und einer radial inneren Freigabestellung bewegbar sind und die Klemmelemente als Schieberelemente ausgebildet sind, die an dem Spannkopf radial verschiebbar geführt sind. Des weiteren betrifft die Erfindung eine Aufnahmeeinrichtung zur Verwendung mit einer solchen Spanneinrichtung.

Die Bearbeitung von Werkstücken ist häufig komplex und kann eine Vielzahl von zerspannenden und spannlosen Arbeitsgängen an unterschiedlichen Bearbeitungsmaschinen umfassen, um aus einem Rohling das fertige Bauteil herzustellen. Bei allen Fertigungsabläufen ist dabei wesentlich, daß das Werkstück bei jedem Arbeitsgang eine definierte Lage an der jeweiligen Werkzeugmaschine einnimmt.

Zu diesem Zweck ist es in der Praxis üblich, das zu bearbeitende Werkstück zunächst auf eine Trägerpalette, Aufspannplatte oder dergleichen aufzuspannen und dann die ganze Einheit über standardisierte Spannsysteme bestehend aus einer aktiven Spanneinrichtung, die an dem Maschinentisch vorgesehen ist, und einem passiven Gegenelement, welches an der Unterseite der Palette vorgesehen ist, an der jeweiligen werkzeugmaschine festzuspannen. In der Produktion kann auf diese Weise die Lage der Schnellspanneinrichtungen als fester Maschinenparameter berücksichtigt werden, so daß es lediglich erforderlich ist, jeweils das Werkstück exakt an der Trägerpalette zu positionieren. Das eigentliche Fest- und Umspannen der Einheit aus Werkstück und Trägerpalette an den Maschinen kann dann sehr schnell und unproblematisch erfolgen, ohne daß eine weitere Positionierung notwendig ist.

Derzeit kommen in der Praxis zwei unterschiedliche Arten von Spannsystemen zum Einsatz. Bei einem bekannten System, wie es beispielsweise aus der DE 198 41 928 A1 bekannt ist, sind als aktive Spanneinrichtungen Spannzylinder vorgesehen, welche eine zentrale Aufnahme aufweisen, in welche ein an der Palette vorgesehener Einzugsbolzen als passives Gegenelement eingesetzt und mittels eines Spannmechanismus fixiert werden kann.

Alternativ ist bekannt, an dem Maschinentisch einen Spannkopf als aktives Bauteil und an der Palette als passives Gegenelement eine Aufnahmeeinrichtung mit einer zentralen Aufnahme vorzusehen, die auf den Spannkopf aufgesetzt und daran mittels eines spannkopfseitigen Spannmechanismus fixiert werden kann.

Beiden bekannten Spannsystemen ist gemein, daß die Fixierung eines Einzugsbolzens in der Aufnahme des Spannzylinders bzw. die Fixierung der Aufnahmeeinrichtung an dem Spannkopf über einen Kugelkäfig erfolgt, der eine Mehrzahl von Kugeln trägt, die radial bewegbar zwischen einer Freigabestellung und einer Spannstellung bewegt werden können. Die Betätigung des Spannmechanismus erfolgt durch einen Spannkolben, der in seiner einen Endstellung eine freie Bewegung der Kugeln in dem Kugelkäfig zuläßt, so daß ein Einzugsbolzen in die Aufnahme eingesetzt bzw. ein Spannelement auf den Spannkopf aufgesetzt werden kann, in seiner anderen Endstellung hingegen die Kugeln in ihre Spannstellung drückt, so daß diese im Falle eines Spannzylinders in eine Nut eines in die Aufnahme eingesetzten Einzugsbolzens hineingedrückt werden, um diesen zu fixieren, bzw. im Falle eines Spannkopfs radial nach außen in eine Nut der Aufnahmeeinrichtung hineingedrückt werden, um diese an dem Spannkopf zu befestigen.

Problematisch bei den bekannten hydraulisch-mechanischen Spanneinrichtungen ist, daß insbesondere der Kugelkäfig anfällig gegen Verschmutzungen durch Späne und kleine Partikel ist, so daß es zu Systemungenauigkeiten und im Extremfall auch zu Funktionsstörungen kommen kann. Bei einem solchen Störungsfall muß jedoch die ganze Spanneinrichtung einer Werkbank oder an der Werkzeugmaschine demontiert werden. Aus diesem Grund wird bei einem Spannzylinder, der aus der US-A-5,961,261 bekannt ist, der Kugelkäfig ersetzt durch radial verschiebbar geführte Schieberelemente, die robust ausgebildet sein können und wenig verschmutzungsanfällig sind. Des weiteren besteht der Vorteil, daß die Schieberelemente im Gegensatz zu Kugeln unrund ausgebildet sind, so daß eine aktive Verriegelung stattfinden kann, indem die Schieberelemente in eine entsprechende Ausnehmung im Bereich der Aufnahme des zu spannenden Bauteils eingreifen. Entsprechend sind die Kräfte, die im Betrieb radial nach innen auf die Schieberelemente wirken, vergleichsweise gering, so daß nur geringe Haltekräfte erforderlich sind, um eine sicher Arretierung zu gewährleisten.

Aufgabe der vorliegenden Erfindung ist es, eine Spanneinrichtung der eingangs genannten Art so auszugestalten, daß das Lösen eines gespannten Bauteils erleichtert wird.

Diese Aufgabe ist bei einer Spanneinrichtung der eingangs genannten Art erfindungsgemäß dadurch gelöst, daß in den Spannkopf von der Oberseite her ein Hubstößel axial verschiebbar eingesetzt ist, welcher in einer passiven Endposition bündig mit der Oberseite des Spannkopfes abschließt und in einer aktiven Position über diese Oberfläche des Spannkopfes vorsteht, wobei der Hubstößel mit den Schieberelementen derart gekoppelt ist, daß er durch eine nach innen gerichtete Radialbewegung der Schieberelemente in die aktive Position angehoben wird, bevor die Schieberelemente ihre Freigabestellung erreichen. Zweckmäßigerweise können dabei an der Innenseite der Schieber-elemente und/oder dem Hubstößel Auflaufschrägen ausgebildet sein, welche bewirken, daß der Hubstößel angehoben wird, wenn die Schiebeelemente in ihrer Freigabestellung bewegt werden. Dieser Ausführungsform liegt die Überlegung zugrunde, durch den Hubstößel das gespannte Bauteil aktiv leicht anzuheben, so daß dieses leichter von dem Spannkopf gelöst werden kann. Weiterhin bietet das Anheben den Vorteil, daß die Anlageflächen zwischen dem Spannkopf und dem zu spannenden Bauteil bzw. der daran vorgesehenen Aufnahmeeinrichtung freigegeben werden und somit gereinigt werden können. Hierzu können in dem Spannkopf und gegebenenfalls dem Hubstößel Druckluftkanäle ausgebildet sein, welche in die Auflage-und/oder Zentrierflächen münden bzw. in deren Umgebung angeordnet sind.

In an sich bekannter Weise kann in dem Spannkopf ein Spannkolben axial verschiebbar angeordnet sein, welcher mit den Schieberelementen in der Weise gekoppelt ist, daß eine Bewegung des Spannkolbens in der einen Richtung in eine nach innen gerichtete Bewegung und eine Bewegung des Spannkolbens in der anderen Richtung in eine nach außen gerichtete Bewegung der Schieberelemente umgesetzt wird. Beispielsweise können die Schieberelemente mit dem Spannkolben durch Stangen gekoppelt sein, welche in dem Spannkolben gehalten und in Bohrungen der Schieberelemente verschiebbar geführt sind, wobei die Stangen zur Achse des Spannkopfes geneigt angeordnet sind, so daß eine Umsetzung der Axialbewegung des Spannkolbens in eine entsprechende Radialbewegung der Schieberelemente erfolgt.

Im Falle der Verwendung eines solchen Spannkolbens ist es zweckmäßig, wenn der Spannkolben durch wenigstens eine Spannfeder in seine der äußeren Spannstellung der Schieberelemente entsprechende Endstellung gedrückt wird und entgegen der Rückstellkraft der Spannfeder hydraulisch oder pneumatisch in seine der Freigabestellung der Schieberelemente entsprechende Endstellung bewegt werden kann. Der zur Aufbringung der hydraulischen oder pneumatischen Betätigungskräfte erforderliche Primär-Druckraum kann dabei in dem Spannkopf ausgebildet sein. Alternativ ist es aber auch möglich, den Primär-Druckraum zwischen dem Kolben und einer in dem Träger ausgebildeten Aufnahme auszubilden. In diesem Fall bildet die Aufnahme des Trägers einen Teil der Spanneinrichtung.

In weiterer Ausbildung der erfindungsgemäßen Spanneinrichtung kann vorgesehen sein, daß ein Sekundärdruckraum vorgesehen ist, in welchem ein Druck aufgebaut werden kann, welcher den Spannkolben in seine Spannstellung drückt und somit die Rückstellkraft der Spannfeder unterstützt. Diese Ausführungsform bietet den Vorteil, daß zum Spannen eines Bauteils in dem Sekundärdruckraum kurzfristig ein Druck aufgebaut werden kann, um die Rückstellkraft der Spannfeder zu unterstützen und auf diese Weise sicherzustellen, daß die Schieberelemente auch ihre gewünschte radial äußere Spannstellung erreichen. Dies kann insbesondere hilfreich sein, wenn die Schieberelemente an ihrem Außenumfang radial nach außen vorstehende Haltenasen aufweisen, die an ihrer zum Träger weisenden Unterseite eine konus- oder keilflächenförmige Haltefläche aufweisen, über welche das zu spannende Bauteil klemmend arretiert wird. In diesem Fall kann ein kurzfristiger Druckaufbau in dem Sekundärdruckraum für eine Erhöhung der Klemmkraft sorgen, die bei einer normalen Keilverbindung vergleichbar ist mit einem kräftigen Schlag auf den Keil (Turbo-Effekt).

Gemäß einem weiteren Aspekt der Erfindung ist eine Aufnahmeeinrichtung zur Anbringung an einem Bauteil, welches mittels einer Spanneinrichtung der eingangs genannten Art gespannt werden soll, vorgesehen. Diese Aufnahmeeinrichtung, welche eine zentrale Aufnahme für den Spannkopf der Spanneinrichtung aufweist, ist erfindungsgemäß dadurch gekennzeichnet, daß sie einen inneren Zentrierring und einen äußeren Spannring aufweist, wobei der zentrierring eine Zentrierfläche zur paßgenauen Anbringung an dem zu spannenden Bauteil besitzt und am Außenumfang des Zentrierrings und am Innenumfang des Spannrings korrespondierende Zentrierflächen zur paßgenauen Positionierung des Spannrings an dem Zentrierring ausgebildet sind. Erfindungsgemäß ist somit die Aufnahmeeinrichtung zweiteilig ausgeführt und besteht aus einem zentralen Zentrierring, der für eine positionsgenaue Anordnung an einem zu fixierenden Bauteil sorgt, und einen Spannring, in welchem im wesentlichen die Aufnahme für den Spannkopf ausgebildet ist. Die zweiteilige Ausbildung hat den Vorteil, daß die Höhe des Spannrings durch beispielsweise Planschleifen leicht verändert und somit an die tatsächlichen Gegebenheiten einfach angepaßt werden kann, und ist grundsätzlich auch bei vorbekannten Spanneinrichtungen mit einem Spannkopf einsetzbar, insbesondere aber auch mit den zuvor beschriebenen Spanneinrichtungen gemäß der vorliegenden Erfindung. In dem letzteren Fall ist vorzugsweise in dem spannringseitigen Bereich der zentralen Aufnahme eine Ringnut ausgebildet, in welche als Schieberelemente ausgebildete Klemmelemente der Spanneinrichtung eingreifen können. Dabei weist die Ringnut zweckmäßigerweise eine konus- oder keilflächenförmige Haltefläche auf, die mit den Schieberelemente in Eingriff kommt, um diese festzuklemmen. Diese Ausführungsform kann insbesondere auch verwendet werden, wenn die Schieberelemente in der vorbeschriebenen Weise mit entsprechenden konus-oder keilflächenförmigen Halteflächen versehen sind und zusätzlich eine Unterstützung der Spannfederfunktion durch eine Druckluftbeaufschlagung über den Sekundärdruckraum erfolgt.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: eine erfindungsgemäße Spanneinrichtung im Längsschnitt mit einem daran fixierten, zu spannenden Bauteil,
- Figur 2: eine der Figur 1 entsprechende Darstellung der erfindungsgemäßen Spanneinrichtung in deren Freigabestellung,
- Figur 3: die Spanneinrichtung aus Figur 2 in einer vergrößerten Schnittdarstellung,
- Figur 4: den Spannkopf der Spanneinrichtung gemäß der Figur 2 im Längsschnitt mit einer vergrößerten Darstellung des oberen Bereichs von diesem,
- Figur 5: die Spanneinrichtung aus Figur 4 in Draufsicht,

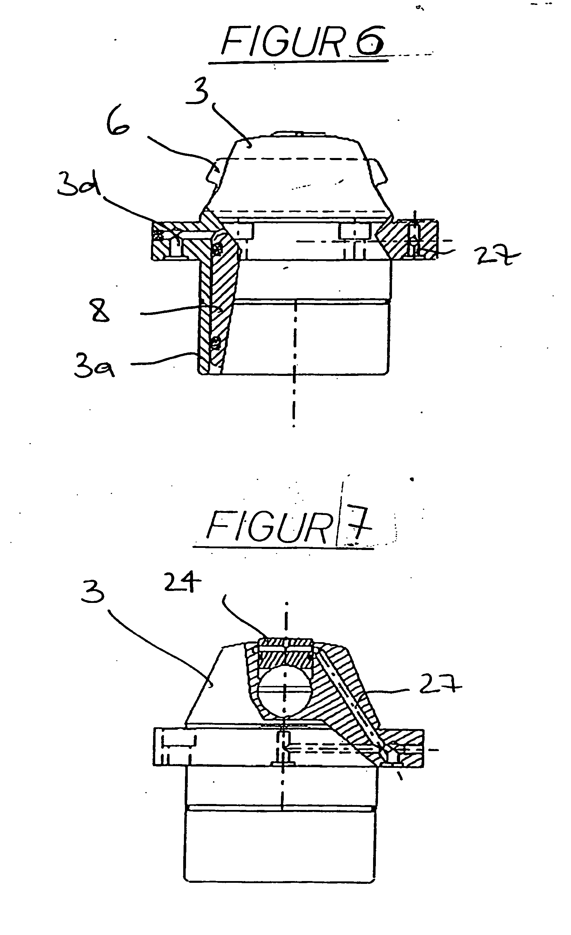

- Figur 6: die Spanneinrichtung im Schnitt V-V aus Figur 4,
- Figur 7: die Spanneinrichtung im Schnitt entlang der Linie VI-VI,
- Figur 8: die Aufnahmeeinrichtung der Spanneinrichtung von Figur 1 montiert an einem zu spannenden Bauteil und
- Figur 9: die Aufnahmeeinrichtung aus Figur 8 in demontiertem Zustand.

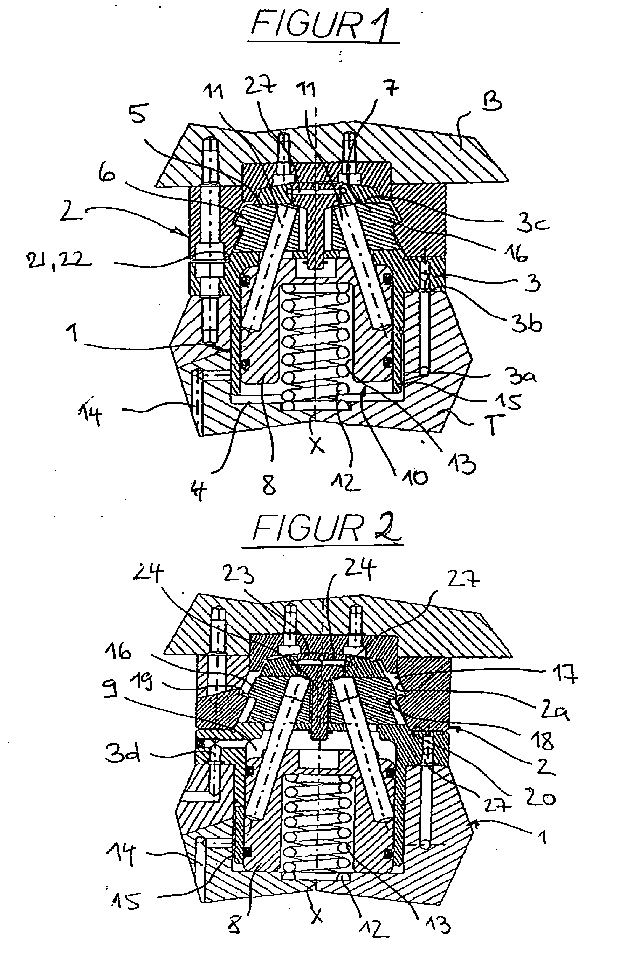

In den Figuren 1 bis 3 ist ein Spannsystem gemäß der vorliegenden Erfindung im Längsschnitt dargestellt, welches dazu dient, ein Bauteil B wie beispielsweise eine Palette an einem Träger T wie beispielsweise einem Maschinentisch oder einem Greifarm eines Roboters zu fixieren. Das Spannsystem besitzt eine aktive Spanneinrichtung 1 mit einem Spannkopf 3, welcher an dem Träger T vorgesehen ist, sowie eine passive Aufnahmeeinrichtung 2, welche an dem zu spannenden Bauteil B fixiert ist und eine Aufnahme 2a aufweist, welche auf den Spannkopf 3 der aktiven Spanneinrichtung 1 gesetzt werden kann, um daran mittels eines Spannmechanismus fixiert zu werden.

Der Spannkopf 3 der aktiven Spanneinrichtung 1 besitzt einen unteren Abschnitt 3a, welcher zylinderförmig ausgebildet und in eine entsprechende zylinderbohrung 4 des Trägers 2 zentriert eingesetzt und über einen Befestigungsflansch 3b an der Oberseite des Trägers 2 festgeschraubt ist. Dabei ist der Ringspalt zwischen dem in die Zylinderbohrung 4 eingreifenden Spannkopfabschnitt 3a und der Zylinderbohrung 4 durch einen O-Ring abgedichtet.

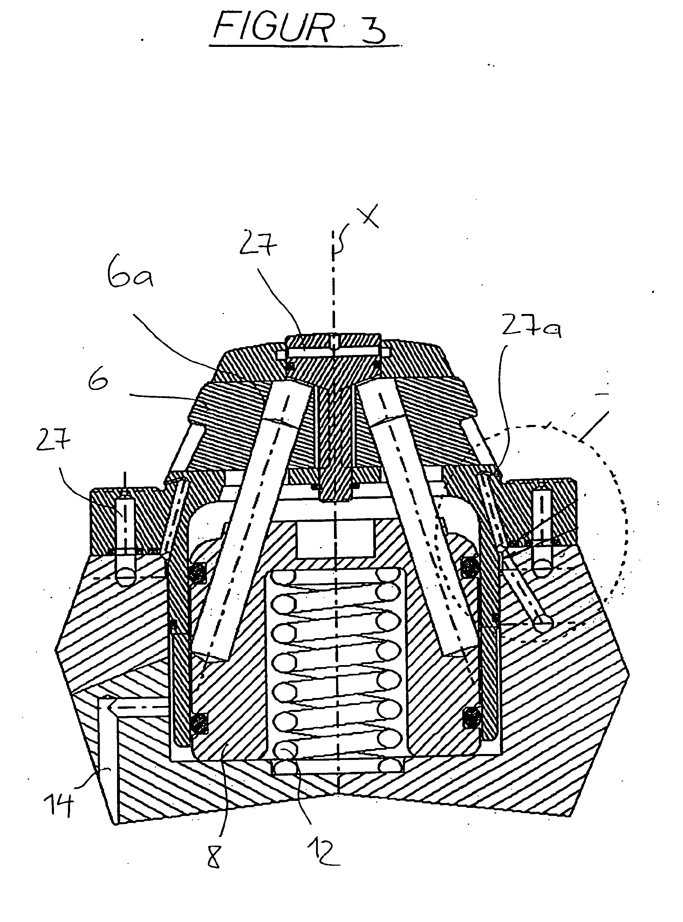

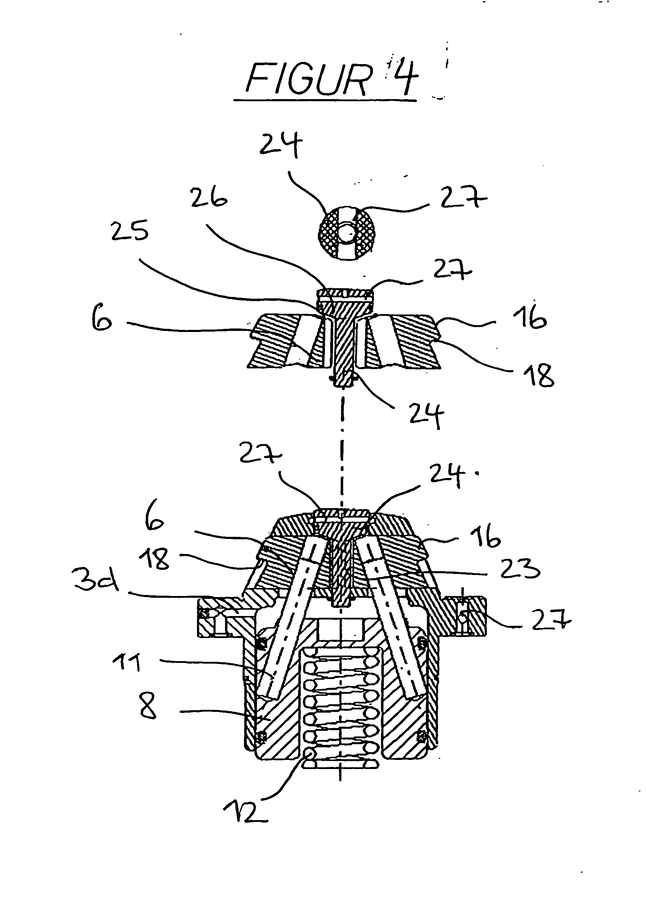

Wie die Figuren 1 bis 3 insbesondere in Verbindung mit der Figur 4 zeigen, ist in dem oberhalb des Befestigungsflansches 3b gelegenen Abschnitt 3c des Spannkopfes 3 eine Durchgangsöffnung 5 vorgesehen, die sich quer zu der Spannkopflängsachse X erstreckt und einen rechteckigen bzw. quadratischen Querschnitt besitzt. In dieser Durchgangsöffnung 5 sind zwei Schieberelemente 6 symmetrisch zur Längsachse X angeordnet und in radialer Richtung zwischen einer äußeren Spannstellung, welche in Figur 1 dargestellt ist, und einer inneren Freigabestellung, welche in Figur 2 gezeigt ist, radial verstellbar geführt.

Die Verstellung der Schieberelemente 6 erfolgt über einen Spannkolben 8, welcher in dem zylindrischen unteren Spannkopfabschnitt 3a verschiebbar gehalten ist, wobei zwischen der Kolbenoberseite und dem Spannkopf 3 ein Primär-Druckraum 9 und zwischen der Kolbenunterseite und der Innenwandung des unteren Spannkopfabschnitts 3a sowie der Zylinderbohrung 4 des Trägers T ein Sekundär-Druckraum 10 gebildet wird. Der Spannkolben 8 ist über zwei Stangen 11 oder Spannbolzen mit den Schieberelementen 6 gekoppelt, um eine Axialbewegung des Spannkolbens 8 in eine Radialbewegung der Schieberelemente 6 umzusetzen. Wie in der Zeichnung gut erkennbar ist, sind diese Stangen 11 in dem Spannkolben 8 fixiert und in Bohrungen 6a der Schieberelemente 6 in ihrer Längsrichtung verschiebbar gehalten. Dabei sind die Stangen 11 in symmetrischer Anordnung zu der Längsachse X der Spanneinrichtung 1 positioniert und laufen nach oben hin aufeinander zu. Diese Anordnung führt dazu, daß eine Bewegung des Spannkolbens 8 aus der in Figur 1 gezeigten oberen Stellung nach unten hin in eine radial nach innen hin gerichtete Bewegung der Schieberelemente 6 in die in Figur 2 dargestellte Lage umgesetzt wird und in umgekehrter Weise eine nach oben gerichtete Bewegung des Spannkolbens 8 in eine radial nach außen gerichtete Bewegung der Schieberelemente 6 umgesetzt wird.

In der dargestellten Ausführungsform wird der Spannkolben 8 durch eine Spannfeder 12 in die in Figur 1 dargestellte obere Endstellung gedrückt, welche der äußeren Spannstellung der Schieberelemente 6 entspricht. Die Spannfeder 12 ist dabei in einer zentralen Aufnahme 13 des Spannkolbens 8 positioniert und stützt sich zwischen dieser und dem Boden der trägerseitigen Zylinderbohrung 4 ab.

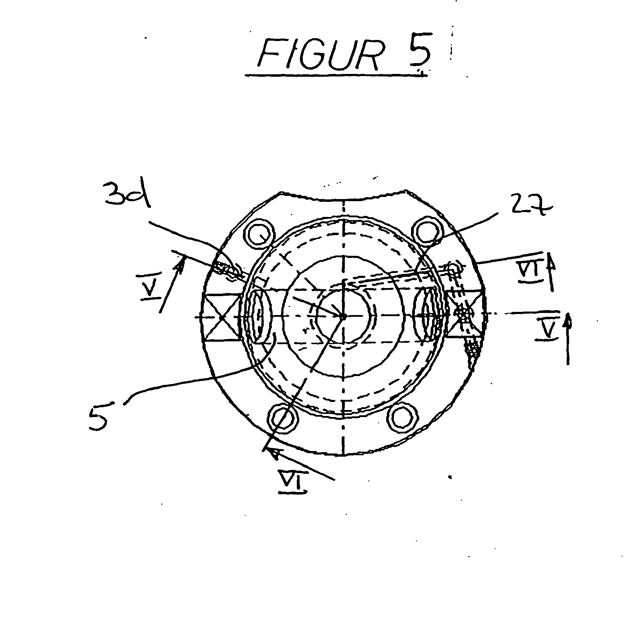

Wie in den Figuren 2 und 5 gut erkennbar ist, mündet in den Primär-Druckraum 9, welcher zwischen der Kolbenoberseite und dem Spannkopf 3 gebildet wird, eine in dem Träger T ausgebildete Leitung 3d, über welche dem Primär-Druckraum 9 ein Druckmedium zugeführt werden kann, um den Spannkolben 8 aus der in Figur 1 dargestellten oberen Endstellung entgegen der Rückstellkraft der Spannfeder 12 in die in Figur 2 dargestellte untere Endstellung zu bringen und auf diese Weise die Schieberelemente 6 in ihre radial innere Freigabestellung zu überführen.

Wie die Figuren 1 bis 3 weiter zeigen, mündet ein Druckluftkanal 14, welcher in dem Träger T ausgebildet ist, in einen Ringspalt 15, welcher zwischen dem unteren Endbereich des in die Zylinderbohrung 4 eingesetzten Spannkopfabschnitts 3a und der Wandung der Zylinderbohrung 4 gebildet wird. Über diesen Druckluftkanal 14 kann dem Sekundär-Druckraum 10 Druckluft zugeführt werden, um die Rückstellwirkung der Spannfeder 12 zu unterstützen, wenn die Schieberelemente 6 aus der in den Figuren 2 und 3 dargestellten Freigabestellung wieder in ihre in Figur 1 dargestellte Spannstellung überführt werden sollen.

Die Schieberelemente 6 weisen außenseitig radial nach außen vorstehende Haltenasen 16 auf, die in der in Figur 1 gezeigten Spannstellung mit einer Ringnut 17 der Aufnahme 2a der passiven Aufnahmeeinrichtung 2 in Eingriff bringbar sind. Die Haltenasen 16 besitzen an ihrer zum Träger T weisenden Unterseite eine konus- oder keilflächenförmige Haltefläche 18, die mit einer korrespondierenden Haltefläche 19 der Ringnut 17 der Aufnahmeeinrichtung 2 in Eingriff kommt. Die Halteflächen 18, 19 an den Schieberelementen 6 und der Aufnahmeeinrichtung 2 sind dabei gegenüber der Radialrichtung geneigt ausgebildet, so daß die Haltenasen 16 der Schieberelemente 6 die Halteflächen 19 an der Aufnahmeeinrichtung 2 nicht nur übergreifen, sondern in klemmenden Kontakt mit diesen kommen, um die Aufnahmeeinrichtung 2 in der in Figur 1 dargestellten Weise an dem Spannkopf 3 festzuspannen. In diesem Spannzustand liegt die Aufnahmeeinrichtung 2 auf speziell hierzu vorgesehene Anlageflächen in der Form von nicht näher dargestellten Auflageinseln 20 auf und wird an einen konischen Zentrierrand 21 des Spannkopfes 3 durch eine korrespondierende Zentrierfläche 22 der Aufnahme 2a positioniert.

In seinem oberen Abschnitt 3c weist der Spannkopf 3 eine zentrale Axialbohrung 23 auf, in welche ein Hubstößel 24 axial verschiebbar eingesetzt ist. Wie insbesondere in den Figuren 1 bis 3 gut erkennbar ist, liegt der Hubstößel 24 auf den Schieberelementen 6 auf. Dabei sind die beiderseitigen Kontaktflächen 25, 26 von Hubstößel 24 einerseits und Schieberelementen 6 andererseits als Auflaufschrägen dergestalt ausgebildet (siehe Figur 4), daß der Hubstößel 24 durch das Zusammenwirken der Kontaktflächen 25, 26 angehoben wird, wenn die Schieberelemente 6 nach innen aufeinander zu bewegt werden, und der Hubstößel 24 sich absenkt, wenn die Schieberelemente 6 auseinander bewegt werden. Dabei erreicht der Hubstößel 24 in der in Figur 1 dargestellten Spannposition der Schieberelemente 6 seine passive, untere Endposition, in der seine Oberfläche bündig mit der Oberseite des Spannkopfes 3 abschließt oder gegenüber dieser etwas abgesenkt ist, und in der in Figur 2 dargestellten inneren Freigabestellung der Schieberelemente 6 eine aktive, obere Endstellung, in welcher er über die Oberseite des Spannkopfes leicht (ca. 0,8 mm) vorsteht. Die Hebebewegung des Hubstößels 24 in seine aktive Position bewirkt, daß auch die Aufnahmeeinrichtung 2 und damit das gespannte Bauteil B angehoben wird.

In dem Träger 2, dem Spannkopf 3 sowie dem Hubstößel 24 sind, wie insbesondere die Figuren 1, 3 und 7 zeigen, Druckluftkanäle 27 ausgebildet, welche in die Anlageflächen 20 an dem Befestigungsflansch 3b sowie die Oberseite des Spannkopfes 3 und des Hubstößels 24 münden, um diesen zu Reinigungszwecken Druckluft zuzuführen. Wie insbesondere die Figur 3 gut erkennen läßt, sind an die Druckluftkanäle 27 spezielle Luftschlitzdüsen 27a ausgeschlossen, welche gegen die inselmäßig ausgebildeten Auflageflächen des Befestigungsflanches 3b gerichtet sind, um diese vollfächig abzublasen und zu reinigen.

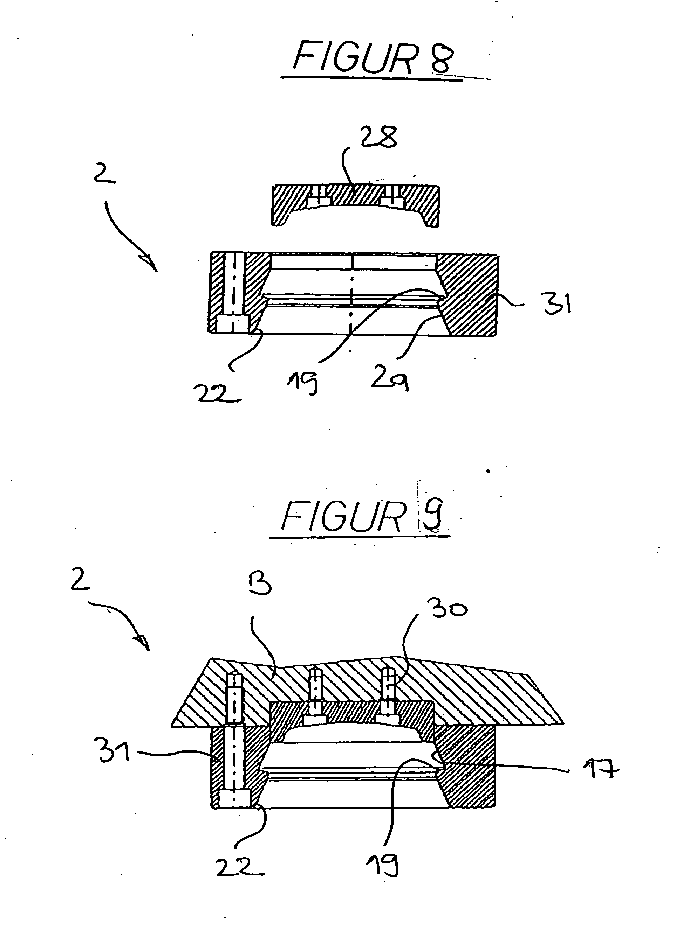

In der dargestellten Ausführungsform ist die Aufnahmeeinrichtung 2, welche an dem zu spannenden Bauteil B vorgesehen ist, zweiteilig ausgebildet (siehe Figuren 7 und 8). Sie besitzt zunächst einen zentralen Zentrierring 28, der in eine entsprechende Vertiefung 29 des zu spannenden Bauteils B zentrierend eingesetzt und darin durch Schrauben 30 befestigt ist. Des weiteren umfaßt die Aufnahmeeinrichtung 2 einen Spannring 31, welcher den Zentrierring 28 umgibt und ebenfalls an dem Bauteil B festgeschraubt ist. Die miteinander in Kontakt kommende Außenfläche des Zentrierrings 28 und Innenfläche des Spannrings 31 weisen Zentrierflächen auf, um den Spannring 31 paßgenau zu positionieren. Die von dem zu spannenden Bauteil B wegweisende Oberfläche 32 des Zentrierrings 28 ist komplementär zu der Oberseite des Spannkopfes 3 ausgebildet, und in dem Spannring 31 ist die Aufnahme 2a ausgebildet, deren Kontur an die Außenkontur der Schieberelemente 6 angepaßt ist. Insbesondere weist der Spannring 31 die Ringnut 17 auf, in welche die Haltenasen 16 der Schieberelemente 6 eingreifen können.

Die Figur 1 zeigt die erfindungsgemäße Spanneinrichtung 1 mit einem daran über die Aufnahmeeinrichtung 2 fixierten Bauteil B. Wenn dieses Bauteil B gelöst werden soll, wird der Spannkolben 8 durch Beaufschlagung des Primär-Druckraums 9 mit einem Druckmedium entgegen der Rückstellkraft der Spannfeder 12 abgesenkt. Eine solche Axialbewegung des Spannkolbens 8 wird über die Stangen 11 in eine radial nach innen gerichtete Bewegung der Schieberelemente 6 umgesetzt, bis die in Figur 2 dargestellte Freigabestellung erreicht ist, in welcher der Spannkolben 8 auf dem Boden der Zylinderbohrung 4 des Trägers 2 aufliegt. Gleichzeitig wird die Bewegung der Schieberelemente 6 über die Auflaufschrägen in eine Hubbewegung des Hubstößels 24 umgesetzt mit der Folge, daß die Aufnahmeeinrichtung 2 mit dem zu spannenden Bauteil B durch den Hubstößel 24 ebenfalls leicht angehoben wird und ein Abhebespalt zwischen der Aufnahmeeinrichtung 2 und dem Spannkopf 3 entsteht. Wenn nun über die Druckluftkanäle 27 Druckluft zugeführt wird, verteilt sich diese in dem Abhebespalt mit einer entsprechenden Querbeschleunigung, so daß die Oberflächen von Spannkopf 6 und Aufnahmeeinrichtung 2 insbesondere im Bereich der Kontaktflächen effektiv gereinigt werden, wobei die Druckluft auch die seitlichen Bereiche der Aufnahme sowie der Schieberelemente 6 erreicht. Über die Luftschlitzdüsen 27a werden dabei insbesondere die Auflageflächen an dem Befestigungsflanch 3b und auch die korrespondierenden Flächen an der Aufnahmeeinrichtung 2 wirksam gereinigt.

Wenn ein neues Bauteil gespannt werden soll, werden die Schieberelemente 6 zunächst durch Beaufschlagung des Primär-Druckraums 9 in die in Figur 2 dargestellte Freigabestellung nach innen bewegt. Anschließend wird die an dem Bauteil fixierte Aufnahmeeinrichtung 2 auf den Spannkopf 3 aufgesetzt und über die konischen Zentrierflächen 21, 22 positioniert. Nun wird der Druck in dem Primär-Druckraum 9 aufgehoben, so daß der Spannkolben 8 durch die Rückstellkraft der Spannfeder 12 in die in Figur 1 dargestellte Stellung angehoben wird. Diese Hebebewegung wird in eine radial nach außen gerichtete Bewegung der Schieberelemente 6 umgesetzt, so daß diese im Bereich ihrer Halteflächen 18 in klemmenden Kontakt mit den entsprechenden Halteflächen 19 der Aufnahmeeinrichtung 2 kommen. Um diese Hebebewegung des Spannkolbens 12 zu unterstützen und insbesondere sicherzustellen, daß die Bewegung nicht frühzeitig abgebrochen wird, weil beispielsweise die Federkraft nicht ausreichend ist, um die an den Halteflächen 18, 19 auftretenden Kräfte zu überwinden, kann in dem Sekundär-Druckraum 10 über die Druckkraft ein entsprechendes Druckmedium zugeführt werden, um einen Druck aufzubauen, welcher den Spannkolben 12 ebenfalls nach oben drückt und somit die Wirkung der Spannfeder 12 unterstützt. Wenn einmal die in Figur 1 dargestellte Endstellung des Spannkolbens 8 erreicht ist, kann der Druck in dem Sekundär-Druckraum 10 wieder aufgehoben werden, da die Schieberelemente 6 durch die Kraft der Spannfeder 12 sowie die selbsthemmende Klemmwirkung zwischen den Schieberelementen 6 und der Aufnahme 2 im Bereich der Halteflächen 18, 19 sicher arretiert ist.

## Patentansprüche

1. Spanneinrichtung zur Fixierung eines Bauteils (B) an einem Träger (T) mit einem Spannkopf (3), der mit einer Aufnahme (2a) eines zu spannenden Bauteils (B) in Eingriff bringbar ist, und einem Spannmechanismus mit mehreren Klemmelementen (6), die an dem Spannkopf (3) gehalten und radial zwischen einer äußeren Spannstellung, in der sie in die Aufnahme (2a) eines zu spannenden Bauteils (B) greifen können, um dieses an dem Spannkopf (3) zu arretieren, und einer radial inneren Freigabestellung bewegbar sind, wobei die Klemmelemente als Schieberelemente (6) ausgebildet sind, die an dem Spannkopf (3) radial verschiebbar geführt sind, **dadurch gekennzeichnet, daß** in den Spannkopf (3) von der Oberseite her ein Hubstößel (24) axial verschiebbar eingesetzt ist, welcher in einer passiven Endposition bündig mit der Oberseite des Spannkopfes (3) abschließt und in einer aktiven Position über diese Oberfläche des Spannkopfes (3) vorsteht, wobei der Hubstößel (24) mit den Schieberelementen (6) derart gekoppelt ist, daß er durch eine nach innen gerichtete Radialbewegung der Schieberelemente (6) in die aktive Position angehoben wird.

2. Spanneinrichtung nach Anspruch 1, **dadurch gekennzeichnet, daß** in dem Spannkopf (3) ein Spannkolben (8) axial verschiebbar angeordnet ist, welcher mit den Schieberelementen (6) in der Weise gekoppelt ist, daß eine Bewegung des Spannkolbens (8) in der einen Richtung in eine nach innen gerichtete Bewegung und eine Bewegung des Spannkolbens (8) in der anderen Richtung in eine nach außen gerichtete Bewegung der Schieberelemente (6) umgesetzt wird.

3. Spanneinrichtung nach Anspruch 2, **dadurch gekennzeichnet, daß** die Schieberelemente (6) mit dem Spannkolben (8) durch Stangen (11) gekoppelt sind, welche in dem Spannkolben (8) gehalten und in Bohrungen (6a) der Schieberelemente (6) verschiebbar geführt sind, wobei die Stangen (11) zur Achse (X) des Spannkopfes (3) geneigt angeordnet sind, so daß eine Axialbewegung des Spannkolbens (8) in eine entsprechende Radialbewegung der Schieberelemente (6) umgesetzt wird.

4. Spanneinrichtung nach Anspruch 2 oder 3, **dadurch gekennzeichnet, daß** der Spannkolben (8) durch wenigstens eine Spannfeder (12) in seine der äußeren Spannstellung der Schieberelemente (6) entsprechende Endstellung gedrückt wird und hydraulisch oder pneumatisch entgegen der Rückstellkraft der Spannfeder (12) in seine der Freigabestellung der Schieberelemente (6) entsprechende Endstellung bewegt werden kann.

5. Spanneinrichtung nach einem der vorherigen Ansprüche 2 bis 4, **dadurch gekennzeichnet, daß** ein Sekundärdruckraum (10) vorgesehen ist, in welchem ein Druck aufgebaut werden kann, welcher den Spannkolben (8) in seine Spannstellung drückt und so die Rückstellkraft der Spannfeder (12) unterstützt.

6. Spanneinrichtung nach einander vorherige Ansprüche, **dadurch gekennzeichnet, daß** die Schieberelemente (6) an ihrem Außenumfang radial nach außen vorstehende Haltenasen (16) aufweisen, die an ihrer zum Träger weisenden Unterseite eine konus- oder keilflächenförmige Haltefläche (18) aufweisen.

7. Spanneinrichtung nach einem der vorherigen Ansprüche, **dadurch gekennzeichnet, daß** an dem Spannkopf (3) eine Zentrierfläche (2) zur paßgenauen Positionierung eines zu spannenden Bauteils (B) ausgebildet ist.

8. Spanneinrichtung nach einem der vorherigen Ansprüche, **dadurch gekennzeichnet, daß** an der Innenseite der Schieberelemente (6) und/oder dem Hubstößel (24) Auflaufschrägen (25, 26) ausgebildet sind, die bewirken, daß der Hubstößel (24) angehoben wird, wenn die Schieberelemente (6) in ihre Freigabestellung bewegt werden.

9. Spanneinrichtung nach einem der vorherigen Ansprüche, **dadurch gekennzeichnet, daß** in dem Spannkopf (3) und gegebenenfalls dem Hubstößel (24) Druckluftkanäle (27) ausgebildet sind, um Auflage- und/oder Zentrierflächen zu reinigen.

## Claims

1. A clamping device for attaching a component (B) to a support (T) with a clamping head (3) which can be engaged with a receptacle (2a) of a component (B) to be clamped, and a clamping mechanism with several clamping elements (6) which are held on the clamping head (3) and are radially moveable between an outer clamping position, in which they can engage in the receptacle (2a) of a component to be clamped (B) in order to lock the latter onto the clamping head (3), and a radially inner release position, the clamping elements being in the form of slide elements (6) which are guided, radially moveable, on the clamping head (3), **characterised in that** a lifting tappet (24) is inserted, axially moveable, into the clamping head (3) from the upper side, and in a passive final position this locks flush with the upper side of the clamping head (3) and in an active position projects over this surface of the clamping head (3), the lifting tappet (24) being coupled to the slide elements (6) such that it can be raised into the active position by an inwardly directed radial movement of the slide elements (6).

2. The clamping device according to Claim 1, **characterised in that** in the clamping head (3) a clamping ram (8) is disposed, axially moveable, and this is coupled to the slide elements (6) such that a movement of the clamping ram (8) in the one direction is converted into an inwards movement, and a movement of the clamping ram (8) in the other direction is converted into an outwards movement of the slide elements (6).

3. The clamping device according to Claim 2, **characterised in that** the slide elements (6) are coupled with the clamping ram (8) by rods (11) which are held in the clamping ram (8) and are guided, moveably, into bore holes (6a) in the slide elements (6), the rods (11) being disposed at an angle to the axis (X) of the clamping head so that an axial movement of the clamping ram (8) is converted into a corresponding radial movement of the slide elements (6).

4. The clamping device according to Claim 2 or 3, **characterised in that** the clamping ram (8) is pressed by at least one tension spring (12) into its end position corresponding to the outer clamping position of the slide elements (6), and can be moved hydraulically or pneumatically against the reset force of the tension spring (12) into its end position corresponding to the release position of the slide elements (6).

5. The clamping device according to any of the preceding claims 2 to 4, **characterised in that** a secondary space (10) is provided in which a pressure can be established which presses the clamping ram (8) into its clamping position, and so supports the reset force of the tension spring (12).

6. The clamping device according to any of the preceding claims, **characterised in that** the slide elements (6) have on their outer circumference holding flanges (16) projecting radially outwards which have a cone- or wedge-shaped holding surface (18) on their lower side pointing towards the support.

7. The clamping device according to any of the preceding claims, **characterised in that** a centering surface (2) is formed on the clamping head (3) for the accurate positioning of a component to be clamped (B).

8. The clamping device according to any of the preceding claims, **characterised in that** on the inner side of the slide elements (6) and/or the lifting tappet (24) ramp inclines (25, 26) are formed, the effect of which is that the lifting tappet (24) is raised when the slide elements (6) are moved into their release position.

9. The clamping device according to any of the preceding claims, **characterised in that** compressed air ducts (27) are formed in the clamping head (3), and if required in the lifting tappet (24) in order to clean the bearing and/or centering surfaces.

## Revendications

1. Dispositif de serrage pour la fixation d'une pièce (B) sur un support (T) avec une tête de serrage (3), qui peut fixer une portion d'entrée (2a) de la pièce (B) et avec un mécanisme de serrage, comprenant plusieurs éléments de serrage (6), qui sont attachés de la tête de serrage (3) et qui se peuvent déplacer dans une direction radiale entre une position de serrage extérieur, dans laquelle ils peuvent fixer la portion d'entrée (2a) d'une pièce (B) pour la fixer dans la tête de serrage (3), et une position radiale intérieure de libération, où les éléments de serrage sont formés comme des éléments de glissement (6) qui peuvent glisser dans la direction radiale sur la tête de serrage (3), **caractérisé en ce que** dans la tête de serrage (3) est introduite de la partie supérieure une tige (24), qui peut se déplacer dans la direction axiale, qui dans une position extrême passive se trouve au même niveau avec la surface supérieure de la tête de serrage (3) et dans une position active dépasse cette surface de la tête de serrage (3), où la tige (24) est couplée avec les éléments de glissement (6) de sorte qu'elle soit élevée dans la position active par un déplacement radial vers l'intérieur des éléments de glissement (6).

2. Dispositif de serrage selon la revendication 1, **caractérisé en ce que** dans la tête de serrage (3) est disposé avec la possibilité de déplacement axial un piston de serrage (8), qui est couplé avec les éléments de glissement (6) de sorte qu'un déplacement du piston de serrage (8) dans une direction s'exprime par un déplacement des éléments de glissement (6) vers l'intérieur, et un déplacement du piston de serrage (8) dans l'autre direction s'exprime par un déplacement vers l'extérieur des éléments de glissement (6).

3. Dispositif de serrage selon la revendication 2, **caractérisé en ce que** les éléments de glissement (6) sont couplés avec le piston (8) par les tiges (11), qui sont attachées du piston de serrage (8) et peuvent glisser dans les canaux (6a) des éléments de glissement (6), où les tiges (11) sont disposées à un inclinaison à l'égard de l'axe (X) de la tête de serrage (3), de sorte qu'un déplacement axial du piston de serrage (8) soit transposé dans un déplacement radial correspondant des éléments de glissement (6).

4. Dispositif de serrage selon la revendication 2 ou 3, **caractérisé en ce que** le piston de serrage (8) est poussé dans sa position d'extrémité de course correspondant à la position extérieure de serrage des éléments de glissement (6) d'au moins un ressort de serrage (12) et qui peut être déplacé par moyens hydrauliques ou pneumatiques contre la force de rappel du ressort (12) dans sa position d'extrémité de couse correspondant à la position de libération des éléments de glissement (6).

5. Dispositif de serrage selon l'une des revendications antérieures 2 à 4, **caractérisé en ce qu'**on est pourvue une chambre de pression secondaire (10), où on peut introduire une pression, qui poussera le piston de serrage (8) dans sa position de serrage et soutient ainsi la force de rappel du ressort de serrage (12).

6. Dispositif de serrage selon l'une des revendications antérieures, **caractérisé en ce que** les éléments de glissement (6) présentent sur leur périphérie extérieure les proéminences d'appui (16) orientées dans la direction radiale vers l'extérieur, qui ont sur leur partie inférieure orientée vers le support une surface d'appui de forme conique ou en forme de clavette (18).

7. Dispositif de serrage selon l'une des revendications antérieures, **caractérisé en ce que** sur la tête de serrage (3) est formée une surface de centrage (2) pour le positionnement exact d'une pièce (B) qui va être serrée.

8. Dispositif de serrage selon l'une des revendications antérieures, **caractérisé en ce que** sur la partie inférieure des éléments de glissement (6) et/ou sur la tige (24) sont formées les surfaces inclinées d'attaque (25, 26), dont l'effet est, que la tige (24) sera élevée, quand les éléments de glissement (6) sont déplacés dans leur position de libération.

9. Dispositif de serrage selon l'une des revendications antérieures, **caractérisé en ce que** dans la tête de serrage (3) et éventuellement dans la tige (24) sont formés les canaux d'air comprimé, pour nettoyer les surfaces d'appui et/ou de centrage.
